# EUROPEAN PATENT SPECIFICATION

(11) **EP 2 057 743 B1**
(45) Date of publication and mention of the grant of the patent: **26.09.2018**
(21) Application number: 07804825.3
(22) Date of filing: 27.08.2007
(51) Int. Cl.: H04B 1/04

(54) **VARIABLE FILTERING FOR RADIO EVOLUTION**
VARIABLE FILTERUNG FÜR FUNKBEURTEILUNG
FILTRAGE VARIABLE POUR ÉVOLUTION DE RADIO

(30) Priority: 30.08.2006 US 841650 P
(43) Date of publication of application: 13.05.2009
(73) Proprietor: Nokia Technologies Oy, 02610 Espoo (FI)
(72) Inventor: NIEMELA, Kari, 90650 Oulu (FI); PIIRAINEN, Olli, 90100 Oulu (FI); SAILY, Mikko, 04130 Sipoo (FI); HULKKONEN, Jari, 90630 Oulu (FI)
(74) Representative: Ruuskanen, Juha-Pekka
(86) International application number: PCT/IB2007/002450
(87) International publication number: WO 2008/029227

(56) References cited:
- WO-A1-2006/038085
- US-B1- 7 046 716
- US-B1- 7 046 716
- SIEMENS: 'GERAN Evolution - Comments on Modified Dual symbol Rate' TDOC GP-061229, 3GPP TSG GERAN#30, LISBON, PORTUGAL 26 June 2006 - 30 June 2006, XP003020774
- SIEMENS: 'Updates to Dual Symbol Rate' TDOC GP-060817, 3GPP TSG GERAN#29, SAN JOSE DEL CABO, MEXICO 24 April 2006 - 28 April 2006, XP003020775

## Description

### Technical Field

This invention generally relates to wireless communications and more specifically to variable filtering for uplink communications.

### Background Art

EDGE (enhanced data rates for global evolution) further evolution candidates have been presented in GERAN (GSM (global system for mobile communications)/EDGE radio access network) 3GPP (3d generation partnership project). Dual Symbol Rate (DSR) for uplink performance improvement is recently proposed. This will imply using higher symbol rates in the uplink (from a mobile station to a network element).

In EDGE Evolution concept development the Dual Symbol Rate (DSR) and Modified Dual Symbol Rate (MDSR) concept have been proposed for the uplink evolution. DSR doubles the modulation rate in the transmitter of the mobile station and MDSR combines higher symbol rate (3/2) with a quadrature amplitude modulation (QAM), e.g., 16-QAM with 16 states and optionally with a quadrature phase-shift keying (QPSK, or π/4-QPSK) modulation. There are also other proposals for different symbol rates, but the principle or variable symbol rate will apply to any combination of different symbol rates and modulation orders.

In GERAN, the symbol duration for GMSK (Gaussian minimum shift keying) and 8PSK (PSK is phase-shift keying) modulation is 3.69µs, thus yielding approximately 270 kHz signal bandwidth with 200 kHz carrier spacing. For EDGE evolution candidates, for example, DSR yields symbol duration and signal bandwidth 1.85µs/540kHz and MDSR yields 2.46µs/406kHz respectively.

For optimized receiver performance, the receiver processes with a full sample rate (or multiple rates with over-sampling), and therefore the receiver operates with this frequency bandwidth. From the receiver point of view, this implies that, with the current 200 kHz channel spacing, the adjacent channel overlap with the receiver bandwidth inspite of the transmitter pulse shaping characteristics. Due to overlapping frequency bands, the receiver performance can be improved by applying a noise whitening filter. An optimal receiver utilizes whitening matched filter, whose effective bandwidth is equal to the symbol rate.

Transmitter filtering reduces interference because it reduces the tendency of a transmitter to interfere with another transmitter in a frequency domain. On the receiver end, filtering improves sensitivity because more noise and interference are rejected. If there are overlapping carriers due to a variable symbol rate, it would be better to separate those carriers in the receiver, and allow a full signal transmitter bandwidth in the mobile (e.g. according to the technology outline description). However, legacy base station subsystems (BSSs) may have different receiver structures and capabilities, e.g., sampling rate and width of the channel filters, which are not able to support optimal pulse shaping from the transmitter with higher symbol rate.

International patent application publication number WO 2006/038085 A1 discloses an apparatus for short-range wireless communications that includes a transceiver configured to operate in different modes, each of these modes corresponding to a particular wireless link type.

United States patent publication number US 7,046,716 B1 discloses a dual-mode ultra wideband (UWB) and wireless local area network (WLAN) communication transceiver that is used to implement two disparate systems of UWB and WLAN communications within a single device.

### Disclosure of the Invention

The present invention is defined by the appended independent claims. Certain more specific aspects are defined by the dependent claims.

According to a first aspect of the invention, a method, comprises: receiving by a mobile station from a network element a shaping filter switch signal comprising characteristics of a transmitter filter needed to support an uplink signal for receiving the uplink signal by the network element from the mobile station; providing the transmitter filter with the characteristics by the mobile station in response to the shaping filter switch signal.

According further to the first aspect of the invention, the providing the transmitter filter comprises: generating a filter instruction signal by the mobile station using the characteristics; and providing the filter instruction signal to a filter module for providing the transmitter filter.

According further to the first aspect of the invention, the transmitter filter may be a finite-impulse-response digital filter and the filter instruction signal may comprise finite-impulse-response filter taps for the finite-impulse-response digital filter and the finite-impulse-response filter taps may provide the characteristics of the transmitter filter.

Still further according to the first aspect of the invention, the filter module may comprise a plurality of filters and the filter instruction signal may be a switching command for switching a forming uplink signal to one filter of the plurality of the filters such that the forming uplink signal is passed through the one filter without being substantially attenuated but is substantially attenuated by all other filters of the plurality of filters, wherein the one filter is the transmitter filter with the characteristics. Further, the plurality may be equal to two.

According further to the first aspect of the invention, the transmitter filter may be a digital interpolation filter and the filter instruction signal may be a cutoff frequency of the digital interpolation filter.

According still further to the first aspect of the invention, the shaping filter switch signal may be a digital bit which value indicates one of two predetermined sets of the characteristics for the transmitter filter.

According further still to the first aspect of the invention, the transmitter filter may be a digital filter.

Still further still according to the first aspect of the invention, the uplink signal may have a dual symbol rate of 13/24 MHz with the bandwidth at half power substantially equals 541 kHz, the uplink signal may have a modified dual symbol rate of 13/32 MHz with the bandwidth at half power substantially equals 405 kHz, or the uplink signal may have a rate of 13/48 or 13/40 MHz with the bandwidth at half power substantially equals 325 kHz.

According to a second aspect of the invention, a computer program product comprises: a computer readable storage structure embodying computer program code thereon for execution by a computer processor with the computer program code, wherein the computer program code comprises instructions for performing the first aspect of the invention, indicated as being performed by a component or a combination of components of the mobile station or the network element.

According to a third aspect of the invention, a mobile station, comprises: a filter shaping/switching control module, responsive to a shaping filter switch signal from a network element, the shaping filter switch signal comprises characteristics of a transmitter filter needed to support an uplink signal for receiving the uplink signal by the network element from the mobile station, and configured to provide a filter instruction signal using the shaping filter switch signal; and a transmitter module, configured to provide the transmitter filter with the characteristics in response to the filter instruction signal.

Further according to the third aspect of the invention, the transmitter filter may be a finite-impulse-response digital filter and the filter instruction signal may comprise finite-impulse-response filter taps for the finite-impulse-response digital filter and the finite-impulse-response filter taps may provide the characteristics of the transmitter filter.

Still further according to the third aspect of the invention, the transmitter module may comprise a plurality of filters and the filter instruction signal may be a switching command for switching a forming uplink signal to one filter of the plurality of the filters such that the forming uplink signal is passed through the one filter without being substantially attenuated but is substantially attenuated by all other filters of the plurality of filters, wherein the one filter is the transmitter filter with the characteristics. Further, the plurality may be equal to two.

According further to the third aspect of the invention, the transmitter filter may be a digital interpolation filter and the filter instruction signal may be a cutoff frequency of the digital interpolation filter.

According still further to the third aspect of the invention, the shaping filter switch signal may be a digital bit which value indicates one of two predetermined sets of the characteristics for the transmitter filter.

According yet further still to the third aspect of the invention, the mobile station may be for wireless communications.

According further still to the third aspect of the invention, an integrated circuit may comprise the filter shaping/switching control module and the receiver module.

Still further still according to the third aspect of the invention, the uplink signal may have a dual symbol rate of 13/24 MHz with the bandwidth at half power substantially equals 541 kHz, the uplink signal may have a modified dual symbol rate of 13/32 MHz with the bandwidth at half power substantially equals 405 kHz, or the uplink signal may have a rate of 13/48 or 13/40 MHz with the bandwidth at half power substantially equals 325 kHz.

According to a fourth aspect of the invention, a mobile station, comprises: means for shaping and switching, responsive to a shaping filter switch signal from a network element, the shaping filter switch signal comprising characteristics of a transmitter filter needed to support an uplink signal for receiving the uplink signal by the network element from the mobile station, for generating and providing a filter instruction signal using the shaping filter switch signal; and means for signal generating and transmitting, for providing the transmitter filter with the characteristics in response to the filter instruction signal.

According further to the fourth aspect of the invention, the transmitter filter may be a digital filter.

According to a fifth aspect of the invention, a mobile communication system, comprises: a network element, configured to provide a shaping filter switch signal comprising characteristics of a transmitter filter needed to support receiving an uplink signal by the network element; and a mobile station, responsive to the shaping filter switch signal, configured to provide the transmitter filter with the characteristics in response to the shaping filter switch signal, for providing an uplink signal to the network element.

According further to the fifth aspect of the invention, the network element may be a base station subsystem.

According to a sixth aspect of the invention, a network element, comprises: a downlink signal generating module, configured to provide a shaping filter switch signal comprising characteristics of a transmitter filter of a mobile station needed to support receiving an uplink signal by the network element; and a transmitter, configured to transmit the shaping filter switch signal to a mobile station for providing the transmitter filter with the characteristics.

According further to the sixth aspect of the invention, the network element may be a part of an evolved global system for mobile communications/ enhanced data rates for global evolution radio access network.

According to a seventh aspect of the invention, a method, comprises: generating by a network element a shaping filter switch signal comprising characteristics of a transmitter filter needed to support an uplink signal for receiving the uplink signal by the network element from a mobile station; and sending the shaping filter switch signal by the network element to the mobile station for providing the transmitter filter with the characteristics by the mobile station.

According further to the seventh aspect of the invention, the network element may be a base station subsystem for wireless communications.

### Brief Description of the Drawings

For a better understanding of the nature and objects of the present invention, reference is made to the following detailed description taken in conjunction with the following drawings, in which:
Figure 1 is a block diagram of a mobile communication system providing variable filtering for uplink communications, according to an embodiment of the present invention;
Figure 2 is a schematic representation of a filter module according to one embodiment of the present invention; and
Figure 3 is a flow chart for implementing variable filtering for uplink communications, according to an embodiment of the present invention.

### Modes for Carrying Out the Invention

A new method, system, apparatus and software product are presented for variable filtering of a mobile station (MS) for supporting uplink communications using available capabilities of a network element in wireless communication systems (e.g., evolved GERAN). According to an embodiment of the present invention the MS may have at least two different pulse shaping filter capabilities (e.g., in its transmitter module) providing at least two different bandwidths: one narrower being suitable for legacy transceivers and another wider and thus optimal for variable symbol rate from performance point of view. A BSS (base station subsystem) may then request to use one of those filter capabilities according to BSS available resources. In other words, an MS transmitter filter bandwidth can be requested by a network using a downlink signal (e.g., a control signal) depending on BSS capabilities and adjacent channel protection requirements. For example, when a network employs legacy hardware, which is not able to receive wide bandwidth signals with overlapping carriers (e.g., due to increased symbol rate), the network is able to adjust the symbol rate and the transmitter filter of the MS according to the BSS uplink hardware and software capabilities.

According to an embodiment of the present invention, a network element (e.g., a base station subsystem, BSS) can sent a shaping filter switch signal comprising characteristics of a transmitter filter needed to support an uplink signal in order to be successfully received by said network element, wherein the MS can then provide the transmitter filter (e.g., a pulse shaping digital filter) with the requested characteristics by the mobile station in response to the shaping filter switch signal. Providing the transmitter filter can comprise of: generating a filter instruction signal by the MS using these characteristics, and providing this filter instruction signal to a filter module for providing this transmitter filter.

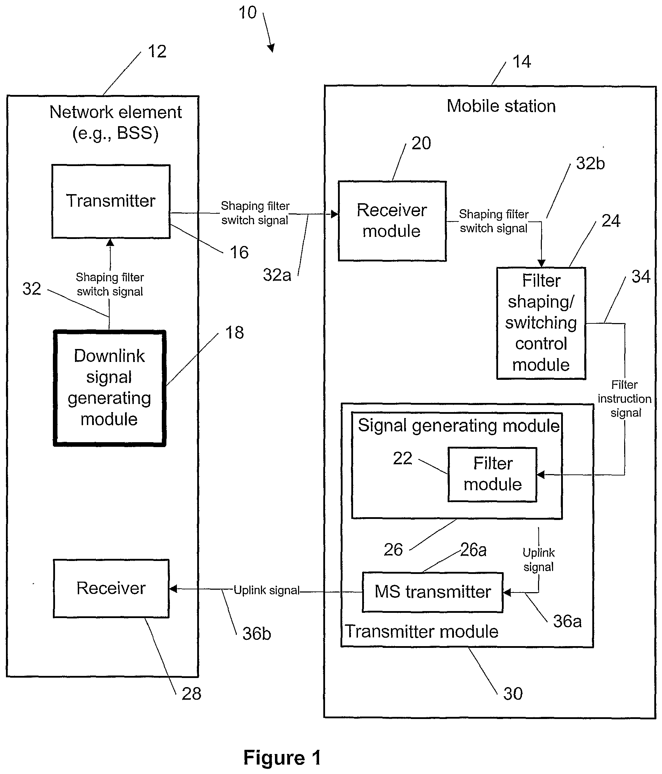

According to one embodiment, the transmitter filter can be a finite-impulse-response (FIR) digital filter and the filter instruction signal can comprise FIR filter taps for the FIR digital filter, wherein the FIR filter taps provide said characteristics of said transmitter filter. These FIR filter taps can be provided by a digital signal processor (DSP) in the MS (e.g., by filter shaping/switching control module, see Figure 1).

According to another embodiment, the filter module can comprise a plurality of filters (e.g., at least two filters) and the filter instruction signal is a switching command for switching a forming uplink signal (e.g., a signal after modulator in a transmitter signal generating module) to one filter of this plurality such that the forming uplink signal is passed through said one filter (e.g., pulse shaping filter) without being substantially attenuated but is substantially attenuated by all other filters of said plurality of filters, wherein this one filter is the transmitter filter with the characteristics requested by the network element.

According yet to another embodiment, the transmitter filter can be a digital interpolation filter and the filter instruction signal can be, e.g., a cutoff frequency of this digital interpolation filter.

Furthermore, according to an embodiment of the present invention, the shaping filter switch signal can be a digital bit (e.g., "narrow/wide) which value indicates one of two predetermined sets of the desired characteristics for the transmitter filter. In some cases this shaping filter switch signal can comprise more than one bit (e.g., for more than two sets of the desired characteristics).

The shaping filter switch signal (bit) may be included in any downlink messages that contains "EGPRS Channel Coding" field (EGPSR stands for enhanced general packet radio service). The shaping filter switch bit can be included, e.g., within the following messages: PACKET UPLINK ACK/NACK, PACKET UPLINK ASSIGNMENT, MULTIPLE TBF UPLINK ASSIGNMENT, PACKET TIMESLOT RECONFIGURE, MULTIPLE TBF TIMESLOT RECONFIGURE or PACKET CS RELEASE INDICATION (see 3GGP TS 44.060 V7.5.0, "3GPP, Technical Specification Group GERAN, GPRS, Mobile Station (MS) - Base Station System (BSS) Interface, Radio Link /Medium Access Control (RLC/MAC) Protocol" , Section 11.2).

It is further noted that the transmitter filter, described herein, can support uplink signals which can have various symbol rates including (but not limited to) rates different than in the enhanced general packet radio service (EGPRS) having, e.g., symbol rate of 13/48 MHz (with the bandwidth at half power substantially equals 180 kHz) such as a dual symbol rate of 13/24 MHz with the bandwidth at half power substantially equals 541 kHz, a modified dual symbol rate of 13/32 MHz with the bandwidth at half power substantially equals 405 kHz, a symbol rate of 13/48 or 13/40 MHz with the bandwidth at half power substantially equals 325 kHz for a Higher Uplink performance for GERAN Evolution (HUGE), etc.

Figure 1 shows an example among others of a block diagram of a mobile communication system **10** providing variable filtering for uplink communications, according to an embodiment of the present invention.

In the example of Figure 1, the mobile station **14** can comprise a receiver module **20,** a filter shaping/switching control module **24** and a transmitter module **30** which comprises a signal generating module **26** and an MS transmitter (e.g., an antenna) **26a.** The module **26** typically comprises a filter module **22** with the transmitter filter having desired characteristics or configurable to have these characteristics, requested by a network element **12** (e.g., BSS). The module **24** can be generally viewed as means for shaping and switching or a structural equivalence (or an equivalent structure) thereof. Also, the module **30** can generally be means for signal generating and transmitting or a structural equivalence (or equivalent structure) thereof. In the context of the present invention, the mobile station **14** can be a wireless communication device, a portable device, a mobile communication device, a mobile phone, a mobile camera phone, etc.

The module **26** can typically comprise, among other possibilities, a source of bits (the information bits to be transmitted), channel coding means (e.g., providing turbo coding or convolution coding); interleaving means for reordering of bits, modulation means for modulating a signal, e.g., using 8PSK, 16-QAM etc., a pulse shaping filter which is shown as the filter module **22** for filtering the transmitted symbols and creating the desired frequency characteristics of the signal, a digital-to-analog converter and other standard components (amplifier, frequency converter, etc.) for providing a feeding signal, shown as an uplink signal **36a** to the antenna. The signal **36a** is sent as a signal **36b** to a receiver **28** of the network element **12.**

Furthermore, the network element **12** can comprise a downlink signal generating module **18** and a transmitter **16.**

According to an embodiment of the present invention, the module **22, 24, 26** or **18** can be implemented as a software or a hardware block or a combination thereof. Furthermore, the module **22, 24, 26** or **18** can be implemented as a separate block or can be combined with any other standard block or module of the user equipment **14** or of the network element **12,** or it can be split into several blocks according to their functionality.

All or selected modules of the user equipment **14** can be implemented using an integrated circuit, and all or selected blocks and/or modules of the network element **12** can be implemented using an integrated circuit as well.

A downlink (DL) shaping filter switch signal **32** (e.g., generated by the module **18**) is transmitted by the transmitter block **18** of the network element **12** to the receiver module **20** of the mobile station **14** (see signal **32a**) and then forwarded (signal **32b**) to the module **24** which generates and provides a filter instruction signal **34,** according to embodiments of the present invention described in detail herein, to the filter module **22** which provides the transmitter filter with the desired characteristics as requested by the network in order to support successful receiving the uplink signal **36b** by said network element from said mobile station;

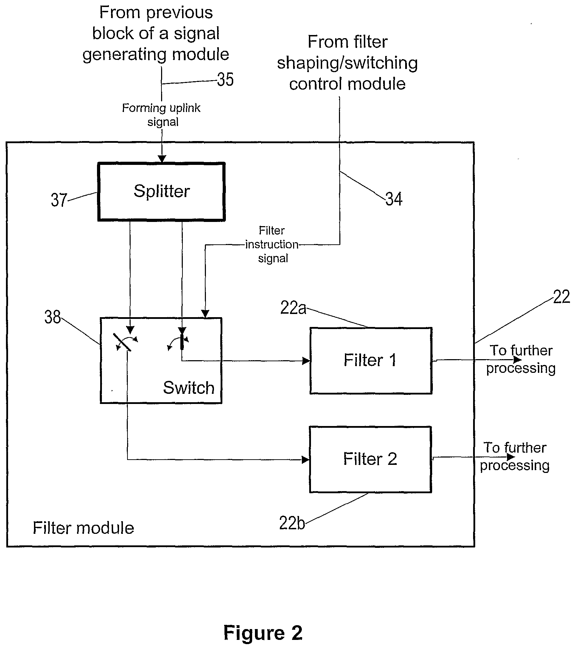

Figure 2 is a schematic representation of a filter module **22** according to one embodiment of the present invention. Here, there are two "fixed" filters **22a** and **22b** which can provide output signals with two sets of desired characteristics (e.g., one for a legacy receiver and another for a higher bandwidth advanced receiver at the network element) in order to support receiving the uplink signal by the network. The filter instruction signal **34** is provided to a switch **38** which switches a forming uplink signal **35** (the signal **35** is divided into two identical signals by a splitter **37** as shown) from a previous processing module (e.g., a modulator) between the filters **22a** and **22b** according to the filter instruction signal **34** (to support the characteristics requested by the network element).

It is noted that other switching arrangement can be used (e.g., using two switches for each filter **22a** and **22b** instead of the switch **38**). Also, it could be more than two "fixed" filters: e.g., one for the legacy receivers and two or more for advanced receivers with higher but different bandwidths.

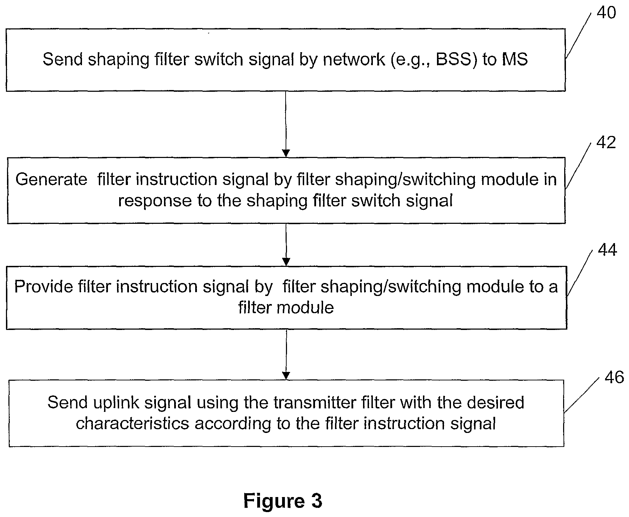

Figure 3 is an example of a flow chart for implementing variable filtering for uplink communications, according to an embodiment of the present invention.

The flow chart of Figure 3 only represents one possible scenario among others. The order of steps shown in Figure 3 is not absolutely required, so generally, the various steps can be performed out of order. In a method according to an embodiment of the present invention, in a first step **40,** the network element **12** (e.g., BSS) sends the shaping filter switch signal **32** to the mobile station **14** (received as the signal **32b** and forwarded to the module **24** as the signal **32b**).

In a next step **42,** the filter shaping/switching control module **24** generates the filter instruction signal **34** in response to the shaping filter switch signal **32b,** according to various embodiments described herein. In a next step **44,** this filter instruction signal **34** is provided to the filter module **22.** Finally, in a step **46,** the uplink signal with the desired characteristics according to the filter instruction signal **34** is generated (signal **36a**) and sent (signal **36b**) by the transmitter module **30** of the mobile station **14** to the network element **12.**

As explained above, the invention provides both a method and corresponding equipment consisting of various modules providing the functionality for performing the steps of the method. The modules may be implemented as hardware, or may be implemented as software or firmware for execution by a computer processor. In particular, in the case of firmware or software, the invention can be provided as a computer program product including a computer readable storage structure embodying computer program code (i.e., the software or firmware) thereon for execution by the computer processor.

It is noted that various embodiments of the present invention recited herein can be used separately, combined or selectively combined for specific applications.

It is to be understood that the above-described arrangements are only illustrative of the application of the principles of the present invention. Numerous modifications and alternative arrangements may be devised by those skilled in the art without departing from the scope of the present invention, and the appended claims are intended to cover such modifications and arrangements.

## Claims

1. A method, comprising:
receiving by a mobile station (14) from a network element (12), a shaping filter switch signal comprising characteristics of a transmitter filter to support an uplink signal for receiving said uplink signal by said network element (12) from said mobile station (14), wherein said shaping filter switch signal is indicative of whether or not said network element (12) comprises legacy receiver hardware; and
providing said transmitter filter with said characteristics by said mobile station (14).

2. The method according to claim 1, wherein said providing said transmitter filter comprises:
generating a filter instruction signal by said mobile station (14) using said characteristics; and
providing said filter instruction signal to a filter module for providing said transmitter filter.

3. A computer program product comprising: a computer readable storage structure embodying computer program code thereon for execution by a computer processor with said computer program code, wherein said computer program code comprises instructions for performing the method according to any preceding claim, indicated as being performed by a component or a combination of components of said mobile station (14) or said network element (12).

4. A method, comprising:
generating by a network element (12) a shaping filter switch signal comprising characteristics of a transmitter filter to support an uplink signal for receiving said uplink signal by said network element (12) from a mobile station (14), wherein said shaping filter switch signal is indicative of whether or not said network element (12) comprises legacy receiver hardware; and
sending said shaping filter switch signal by the network element (12) to the mobile station (14) for providing said transmitter filter with said characteristics.

5. The method according to claim 4, wherein said network element (12) comprises a base station subsystem for wireless communications.

6. A computer program product comprising: a computer readable storage structure embodying computer program code thereon for execution by a computer processor with said computer program code, wherein said computer program code comprises instructions for performing the method according to claims 4-5, indicated as being performed by a component or a combination of components of said mobile station (14) or said network element (12).

7. A mobile station (14), comprising:
a filter shaping/switching controlling means (24), responsive to a shaping filter switch signal from a network element (12), said shaping filter switch signal comprising characteristics of a transmitter filter to support an uplink signal, for generating and providing a filter instruction signal using said shaping filter switch signal, wherein said shaping filter switch signal is indicative of whether or not said network element (12) comprises legacy receiver hardware; and
a transmitting means (30), for providing said transmitter filter with said characteristics.

8. The mobile station (14) according to claim 7, wherein said transmitter filter is a finite-impulse-response digital filter and said filter instruction signal comprises finite-impulse-response filter taps for said finite-impulse-response digital filter and said finite-impulse-response filter taps provide said characteristics of said transmitter filter.

9. The mobile station (14) according to claims 7-8, wherein said transmitting means comprises at least two filters and said filter instruction signal is a switching command for switching a forming uplink signal to one filter of said at least two filters such that said forming uplink signal is passed through said one filter without being substantially attenuated but is substantially attenuated by all other filters of said at least two filters, wherein said one filter comprises said transmitter filter with said characteristics.

10. The mobile station (14) according to claims 7-9, wherein said transmitter filter is a digital interpolation filter and said filter instruction signal is a cutoff frequency of said digital interpolation filter.

11. The mobile station (14) according to claims 7-10, wherein said shaping filter switch signal is a digital bit which value indicates one of two predetermined sets of said characteristics for said transmitter filter.

12. The mobile station (14) according to claims 7-11, wherein an integrated circuit comprises the filter shaping/switching controlling means and the transmitting means.

13. The mobile station (14) according to claims 7-12, wherein said uplink signal has a dual symbol rate of 13/24 MHz with said bandwidth at half power substantially equals 541 kHz, said uplink signal has a modified dual symbol rate of 13/32 MHz with said bandwidth at half power substantially equals 405kHz, or said uplink signal has a rate of 13/48 or 13/40 MHz with said bandwidth at half power substantially equals 325 kHz.

14. A network element (12), comprising:
a downlink signal generating means (18), for providing a shaping filter switch signal comprising characteristics of a transmitter filter of a mobile station (14) to support an uplink signal, wherein said shaping filter switch signal is indicative of whether or not said network element (12) comprises legacy receiver hardware; and
a transmitting means (16), for transmitting said shaping filter switch signal to a mobile station (14) for providing said transmitter filter with said characteristics.

15. A network element (12) according to claim 14, wherein said network element (12) is a part of an evolved global system for mobile communications/ enhanced data rates for global evolution radio access network.

## Patentansprüche

1. Verfahren, umfassend:
Empfang eines Formfilterschaltsignals, das Eigenschaften eines Sendefilters umfasst, um ein Uplinksignal zu unterstützen, um das Uplinksignal durch das Netzwerkelement (12) von der mobilen Station (14) zu empfangen, von einem Netzwerkelement (12) durch eine mobile Station (14), wobei das Formfilterschaltsignal darauf hinweist, ob das Netzwerkelement (12) Altsystemempfangshardware umfasst; und
Bereitstellung des Sendefilters mit den Eigenschaften durch die mobile Station (14).

2. Verfahren nach Anspruch 1, wobei die Bereitstellung des Sendefilters umfasst:
Erzeugung eines Filteranweisungssignals durch die mobile Station (14) unter Verwendung der Eigenschaften; und
Bereitstellung des Filteranweisungssignals an ein Filtermodul zum Bereitstellen des Sendefilters.

3. Computerprogrammprodukt, umfassend: eine computerlesbare Speicherstruktur, auf der Computerprogrammcode enthalten ist, der durch einen Computerprozessor mit dem Computerprogrammcode ausgeführt werden soll, wobei der Computerprogrammcode Anweisungen umfasst, das Verfahren nach einem der vorhergehenden Ansprüche auszuführen, das als durch eine Komponente oder eine Kombination von Komponenten der mobilen Station (14) oder des Netzwerkelements (12) ausgeführt angezeigt wird.

4. Verfahren, umfassend:
Erzeugung eines Formfilterschaltsignals, das Eigenschaften eines Senderfilters umfasst, durch ein Netzwerkelement (12), um ein Uplinksignal für den Empfang des Uplinksignals durch das Netzwerkelement (12) von einer mobilen Station (14) zu unterstützen, wobei das Formfilterschaltsignal darauf hinweist, ob das Netzwerkelement (12) Altsystemempfängerhardware umfasst oder nicht; und
Senden des Formfilterschaltsignals durch das Netzwerkelement (12) an die mobile Station (14) zum Bereitstellen des Sendefilters mit den Eigenschaften.

5. Verfahren nach Anspruch 4, wobei das Netzwerkelement (12) ein Basisstations-Untersystem für drahtlose Kommunikationen umfasst.

6. Computerprogrammprodukt, umfassend eine computerlesbare Speicherstruktur, auf der Computerprogrammcode zur Ausführung durch einen Computerprozessor mit dem Computerprogrammcode verkörpert ist, wobei der Computerprogrammcode Anweisungen umfasst, um das Verfahren nach Anspruch 4 bis 5 auszuführen, das als durch eine Komponente oder eine Kombination von Komponenten der mobilen Station (14) oder des Netzwerkelements (12) ausgeführt angezeigt wird.

7. Mobile Station (14), umfassend:
Filterform-/Schaltsteuerungsmittel (24), das auf ein Formfilterschaltsignal von einem Netzwerkelement (12) reagiert, wobei das Formfilterschaltsignal Eigenschaften eines Sendefilters umfasst, um ein Uplinksignal zu unterstützen, um ein Filteranweisungssignal unter Verwendung des Formfilterschaltsignals zu erzeugen und bereitzustellen, wobei das Formfilterschaltsignal anzeigt, ob das Netzwerkelement (12) Altsystemempfängerhardware umfasst oder nicht; und
ein Sendemittel (30), um den Sendefilter mit den Eigenschaften bereitzustellen.

8. Mobile Station (14) nach Anspruch 7, wobei der Sendefilter ein digitaler "Finite-Impulse-Response"-Filter ist und das Filteranweisungssignal "Finite-Impulse-Response"-Filterabrufe für den digitalen "Finite-Impulse-Response"-Filter umfasst, und die "Finite-Impulse-Response"-Filterabrufe die Eigenschaften des Sendefilters bereitstellen.

9. Mobile Station (14) nach Anspruch 7 bis 8, wobei das Sendemittel mindestens zwei Filter umfasst und das Filteranweisungssignal ein Schaltbefehl ist, um ein sich bildendes Uplinksignal auf einen Filter der mindestens zwei Filter zu schalten, sodass das sich bildende Uplinksignal durch den einen Filter geleitet wird, ohne wesentlich gedämpft zu werden, jedoch durch alle anderen Filter der mindestens zwei Filter wesentlich gedämpft wird, wobei der eine Filter den Sendefilter mit den Eigenschaften umfasst.

10. Mobile Station (14) nach Anspruch 7 bis 9, wobei der Sendefilter ein digitaler Interpolationsfilter ist, und das Filteranweisungssignal eine Abschnittfrequenz des digitalen Interpolationsfilters ist.

11. Mobile Station (14) nach Anspruch 7 bis 10, wobei das Formfilterschaltsignal ein digitales Bit ist, dessen Wert einen von zwei vorgegebenen Sätzen der Eigenschaften für den Sendefilter angibt.

12. Mobile Station (14) nach Anspruch 7 bis 11, wobei ein integrierter Schaltkreis das Filterform-/- schaltsteuermittel und das Sendemittel umfasst.

13. Mobile Station (14) nach Anspruch 7 bis 12, wobei das Uplinksignal eine duale Symbolrate von 13/24 MHz aufweist, wobei die Bandbreite bei halber Leistung im Wesentlichen 541 kHz entspricht, das Uplinksignal eine modifizierte duale Symbolrate von 13/32 MHz aufweist, wobei die Bandbreite bei halber Leistung im Wesentlichen 405kHz entspricht, oder das Uplinksignal eine Rate von 13/48 oder 13/40 MHz aufweist, wobei die Bandbreit bei halber Leistung im Wesentlichen 325 kHz entspricht.

14. Netzwerkelement (12), umfassend:
ein Downlinksignal-Erzeugungsmittel (18), um ein Formfilterschaltsignal bereitzustellen, das Eigenschaften eines Sendefilters einer mobilen Station (14) umfasst, um ein Uplinksignal zu unterstützen, wobei das Formfilterschaltsignal darauf hinweist, ob das Netzwerkelement (12) Altsystemempfängerhardware enthält; und
ein Sendemittel (16), um das Formfilterschaltsignal an eine mobile Station (14) zu senden, um den Sendefilter mit den Eigenschaften bereitzustellen.

15. Netzwerkelement (12) nach Anspruch 14, wobei das Netzwerkelement (12) ein Teil eines entwickelten globalen Systems zur mobilen Kommunikation/für verbesserte Datenraten für das globale Evolutionsfunkzugriffsnetzwerk ist.

## Revendications

1. Procédé comprenant :
la réception, par une station mobile (14) d'un élément de réseau (12), d'un signal de sélecteur de filtre de mise en forme comprenant des caractéristiques d'un filtre d'émetteur pour prendre en charge un signal de liaison montante pour recevoir ledit signal de liaison montante par ledit élément de réseau (12) en provenance de ladite station mobile (14), dans lequel ledit signal de sélecteur de filtre de mise en forme indique si ledit élément de réseau (12) comprend, ou non, un matériel de récepteur existant ; et
la fourniture dudit filtre d'émetteur avec lesdites caractéristiques par ladite station mobile (14).

2. Procédé selon la revendication 1, dans lequel ladite fourniture dudit filtre d'émetteur comprend :
la génération d'un signal d'instruction de filtre par ladite station mobile (14) utilisant lesdites caractéristiques ; et
la fourniture dudit signal d'instruction de filtre à un module de filtre pour fournir ledit filtre d'émetteur.

3. Produit-programme d'ordinateur comprenant : une structure de stockage lisible par ordinateur intégrant un code de programme d'ordinateur sur ce dernier pour une exécution par un processeur d'ordinateur avec ledit code de programme d'ordinateur, dans lequel ledit code de programme d'ordinateur comprend des instructions pour réaliser le procédé selon l'une quelconque des revendications précédentes, indiqué comme étant réalisé par un composant ou une combinaison de composants de ladite station mobile (14) ou dudit élément de réseau (12) .

4. Procédé comprenant :
la génération, par un élément de réseau (12), d'un signal de sélecteur de filtre de mise en forme comprenant des caractéristiques d'un filtre d'émetteur pour prendre en charge un signal de liaison montante pour recevoir ledit signal de liaison montante par ledit élément de réseau (12) en provenance d'une station mobile (14), dans lequel ledit signal de sélecteur de filtre de mise en forme indique si ledit élément de réseau (12) comprend, ou non, un matériel de récepteur existant ; et
l'envoi dudit signal de sélecteur de filtre de mise en forme par l'élément de réseau (12) à la station mobile (14) pour fournir ledit filtre d'émetteur avec lesdites caractéristiques.

5. Procédé selon la revendication 4, dans lequel ledit élément de réseau (12) comprend un sous-système de station de base pour des communications sans fil.

6. Produit-programme d'ordinateur comprenant : une structure de stockage lisible par ordinateur intégrant un code de programme d'ordinateur sur ce dernier pour une exécution par un processeur d'ordinateur avec ledit code de programme d'ordinateur, dans lequel ledit code de programme d'ordinateur comprend des instructions pour réaliser le procédé selon l'une quelconque des revendications 4 à 5, indiqué comme étant réalisé par un composant ou une combinaison de composants de ladite station mobile (14) ou dudit élément de réseau (12).

7. Station mobile (14) comprenant :
un moyen de commande de mise en forme/commmutation de filtre (24), sensible à un signal de sélecteur de filtre de mise en forme en provenance d'un élément de réseau (12), ledit signal de sélection de filtre de mise en forme comprenant des caractéristiques d'un filtre d'émetteur pour prendre en charge un signal de liaison montante pour générer et fournir un signal d'instruction de filtre à l'aide dudit signal de sélecteur de filtre de mise en forme, dans laquelle ledit signal de sélecteur de filtre de mise en forme indique si ledit élément de réseau (12) comprend, ou non, un matériel de récepteur existant ; et
un moyen de transmission (30) pour fournir ledit filtre d'émetteur avec lesdites caractéristiques.

8. Station mobile (14) selon la revendication 7, dans laquelle ledit filtre d'émetteur est un filtre numérique de réponse impulsionnelle finie et ledit signal d'instruction de filtre comprend des languettes de filtre de réponse impulsionnelle finie pour ledit filtre numérique de réponse impulsionnelle finie et lesdites languettes de filtre de réponse impulsionnelle finie fournissent lesdites caractéristiques dudit filtre d'émetteur.

9. Station mobile (14) selon les revendications 7 à 8, dans laquelle ledit moyen de transmission comprend au moins deux filtres et ledit signal d'instruction de filtre est une commande de commutation pour commuter un signal de liaison de montante de formation à un unique filtre desdits deux, ou plus, filtres de telle sorte que ledit signal de liaison montante de formation soit passé à travers ledit unique filtre sans être sensiblement atténué mais est sensiblement atténué par tous les autres filtres desdits deux, ou plus, filtres, dans laquelle ledit unique filtre comprend ledit filtre d'émetteur avec lesdites caractéristiques.

10. Station mobile (14) selon les revendications 7 à 9, dans laquelle ledit filtre d'émetteur est un filtre d'interpolation numérique et ledit signal d'instruction de filtre est une fréquence de coupure dudit filtre d'interpolation numérique.

11. Station mobile (14) selon les revendications 7 à 10, dans laquelle ledit signal de sélecteur de filtre de mise en forme est un bit numérique dont une valeur indique l'un des deux ensembles prédéterminés desdites caractéristiques pour ledit filtre d'émetteur.

12. Station mobile (14) selon les revendications 7 à 11, dans laquelle un circuit intégré comprend le moyen de commande de mise en forme/commutation de filtre et le moyen de transmission.

13. Station mobile (14) selon les revendications 7 à 12, dans laquelle ledit signal de liaison montante présente un débit de symbole double de 13/24 MHz avec ladite largeur de bande à une demi-puissance sensiblement égale à 541 kHz, ledit signal de liaison montante présente un débit de symbole double modifié de 13/32 MHz avec ladite largeur de bande à une demi-puissance sensiblement égale à 405 kHz ou ledit signal de liaison montante présente un débit de 13/48 ou de 13/40 MHz avec ladite largeur de bande à une demi-puissance sensiblement égale à 325 kHz.

14. Élément de réseau (12) comprenant :
un moyen de génération de signal de liaison descendante (18) pour fournir un signal de sélecteur de filtre de mise en forme comprenant des caractéristiques d'un filtre d'émetteur d'une station mobile (14) pour prendre en charge un signal de liaison montante, dans lequel ledit signal de sélecteur de filtre de mise en forme indique si ledit élément de réseau (12) comprend, ou non, un matériel de récepteur existant ; et
un moyen de transmission (16) pour transmettre ledit signal de sélecteur de filtre de mise en forme à une station mobile (14) pour fournir ledit filtre d'émetteur avec lesdites caractéristiques.

15. Élément de réseau (12) selon la revendication 14, dans lequel ledit élément de réseau (12) fait partie d'un système mondial évolué pour des communications mobiles/des débits de données améliorés pour un réseau d'accès radio à évolution mondiale.
